# FASCICULE DE BREVET EUROPEEN

(11) **EP 2 355 953 B1**
(45) Date de publication et mention de la délivrance du brevet: **15.08.2012**
(21) Numéro de dépôt: 09795480.4
(22) Date de dépôt: 20.11.2009
(51) Int. Cl.: B23K 26/24, B23K 26/10, B23K 26/42, B62D 65/06

(54) **Procédé d'assemblage de deux toles par soudure laser, notamment pour assembler la tôle d'encadrement d'une porte de véhicule automobile à la doublure de cette porte**
Verfahren zur Montage zweier Bleche mittels Laserschweissen, vor allem zur Verschweißung des Metallblechs um eine Kraftfahrzeugtür mit der Verkleidung dieser Tür
Method for assembling two sheets by laser welding, notably for assembling the sheet metal surround of a motor vehicle door with the lining of this door

(30) Priorité: 09.12.2008 FR 0858406
(43) Date de publication de la demande: 17.08.2011
(73) Titulaire: Peugeot Citroën Automobiles Société Anonyme, 78140 Vélizy Villacoublay (FR)
(72) Inventeur: SCHMITT, Jean-Charles, F-90000 Belfort (FR)
(74) Mandataire: Fernandez, Francis Lionel
(86) Numéro de dépôt international: PCT/FR2009/052238
(87) Numéro de publication internationale: WO 2010/066974

(56) Documents cités:
- EP-A- 0 771 605
- EP-A- 1 238 748
- WO-A-03/066273
- WO-A-2004/091843
- FR-A- 2 881 711
- JP-A- 2001 162 387
- JP-A- 2002 361 456

## Description

La présente invention concerne un procédé d'assemblage de deux tôles. WO 03/066273 A1 décrit un tel procédé

Ce procédé s'applique en particulier à l'assemblage par soudure laser de l'encadrement d'une porte de véhicule automobile.

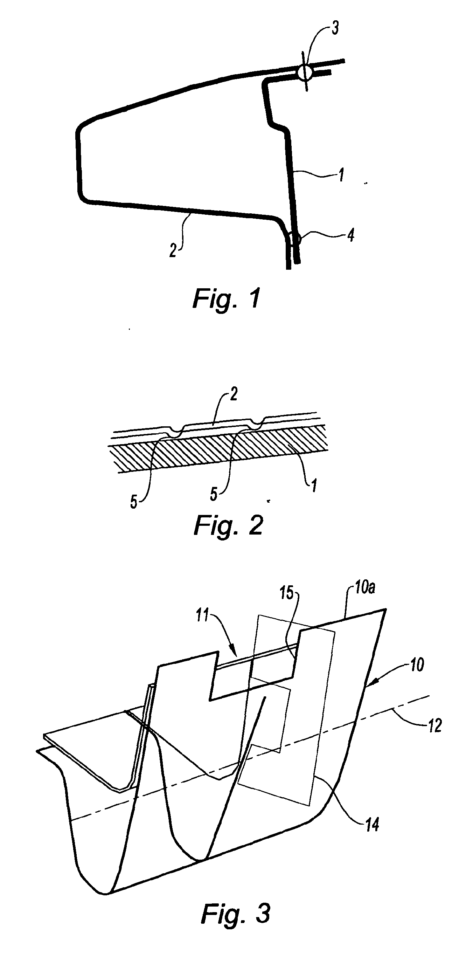

La figure 1 est une vue en coupe horizontale de l'encadrement d'une porte de véhicule automobile qui comprend une tôle d'encadrement 1 de section transversale sensiblement en L et une tôle de doublure 2 de section sensiblement en U.

Cet encadrement est actuellement assemblé par des soudures par laser qui sont réalisées dans les zones 3 et 4 dans lesquelles les bords des deux tôles 1 et 2 se recouvrent.

Les tôles d'encadrement 1 et de doublure 2 sont préalablement revêtues de sorte qu'il faut espacer les deux tôles 1, 2, dans les zones de soudure par laser, pour garantir un jeu d'au moins 0,1 mm pour permettre l'échappement des gaz.

Actuellement, ce jeu entre les tôles est réalisé au moyen d'empreintes 5 (voir la vue en coupe de la figure 2) réalisées par emboutissage sur la tôle la moins épaisse à savoir la doublure 2.

Cependant, la réalisation de ces empreintes complique les pièces et l'outillage nécessaires pour leur mise en oeuvre.

Le but de la présente invention est de remédier à cet inconvénient en créant un procédé d'assemblage de deux tôles par soudure laser dans lequel il n'est pas nécessaire de réaliser des empreintes ou autres formes sur l'une des deux tôles.

Ce but est atteint, selon l'invention, grâce au procédé d'assemblage de deux tôles par soudure laser, dans lequel les deux tôles sont disposées en appui l'une contre l'autre suivant une ligne pour former un dièdre dans la zone destinée à être soudée par laser, par application d'un moyen de serrage pliant l'une des tôles vers l'autre tôle autour de la ligne d'appui, caractérisé en ce que ledit moyen de serrage est formé d'un bloc rigide comportant deux surfaces d'appui espacées, l'une des surfaces d'appui étant apte à être appliquée sur cette première tôle dans la zone de ladite ligne d'appui, de façon à plier la première tôle autour de ladite liane d'appui pour réduire l'angle du dièdre formé par les deux tôles dans ladite zone, l'autre de ces deux surfaces du bloc étant apte à être appliquée sur la seconde tôle à travers une encoche de la première tôle dont le fond est distant de ladite ligne d'appui, afin de former entre les tôles un espacement prédéterminé.

Cet espacement prédéterminé entre les deux tôles permet lors du soudage par laser aux gaz de s'échapper de l'espace compris entre les deux tôles.

Cet espacement prédéterminé est ainsi obtenu simplement en réglant par pliage l'angle du dièdre formé entre les deux tôles dans la zone destinée à être soudée par laser.

De préférence, ledit espacement prédéterminé entre les deux tôles est de l'ordre de 0,1 mm.

L'ensemble de tôles liées entre elles selon le procédé de l'invention est caractérisé en ce que le bord d'une première tôle comporte au moins une encoche dont le fond est distant de ladite ligne d'appui.

Dans cet ensemble, la seconde tôle est plus épaisse que la première tôle pour que cette seconde tôle résiste à l'effort de serrage exercé par ledit bloc rigide.

La seconde tôle peut être l'encadrement d'une porte de véhicule automobile et la première tôle peut être la doublure de cette porte.

Dans ce cas, la tôle de la doublure peut présenter une section transversale sensiblement en U, l'une des ailes de ce U étant appliquée contre la tôle de l'encadrement pour former avec celle-ci ladite ligne d'appui et la tôle de l'encadrement peut présenter une section transversale sensiblement en L, ladite ligne d'appui étant située à la base de l'une des deux branches du L, l'effort de serrage du moyen de serrage étant exercé sensiblement dans la direction de l'autre branche du L.

De préférence, le bord de la tôle de la doublure qui est opposé à la base du U présente plusieurs encoches réparties tout autour de l'encadrement de la porte, chacune de ces encoches étant adaptée pour le passage d'un moyen de serrage.

Dans un mode de réalisation très avantageux de l'invention, la surface d'appui dudit bloc rigide qui est destinée à être appliquée sur la seconde tôle présente une inclinaison égale de celle de ladite seconde tôle et l'autre surface d'appui qui est destinée à être appliquée sur la première tôle présente une inclinaison différente de celle de la première tôle pour exercer sur celle-ci un effort de serrage qui plie la première tôle autour de ladite ligne d'appui jusqu'à ce que l'inclinaison de cette tôle soit égale à celle de ladite autre surface d'appui.

De préférence également, les deux surfaces d'appui dudit bloc rigide sont séparées l'une de l'autre par un évidement.

D'autres particularités et avantages de l'invention apparaîtront encore tout au long de la description ci-après.

Aux dessins annexés, donnés à titre d'exemples, non limitatifs : la figure 1 est une vue en coupe horizontale de l'encadrement d'une porte de véhicule la ligne 2 est une vue en coupe des deux tôles de la figure 1
- la figure 3 est une vue en perspective montrant partiellement une tôle d'encadrement et une tôle de doublure en appui l'une sur l'autre et schématiquement un moyen de serrage en appui contre les deux tôles,
- la figure 4 est une vue en coupe transversale des deux tôles de la figure 3, le moyen de serrage étant prêt à exercer un effort de serrage sur les deux tôles,
- la figure 5 est une vue analogue à la figure 4 montrant le pliage de la tôle de doublure après l'effort de serrage exercé par le moyen de serrage.

Les figures 3 à 5 illustrent le procédé d'assemblage selon l'invention.

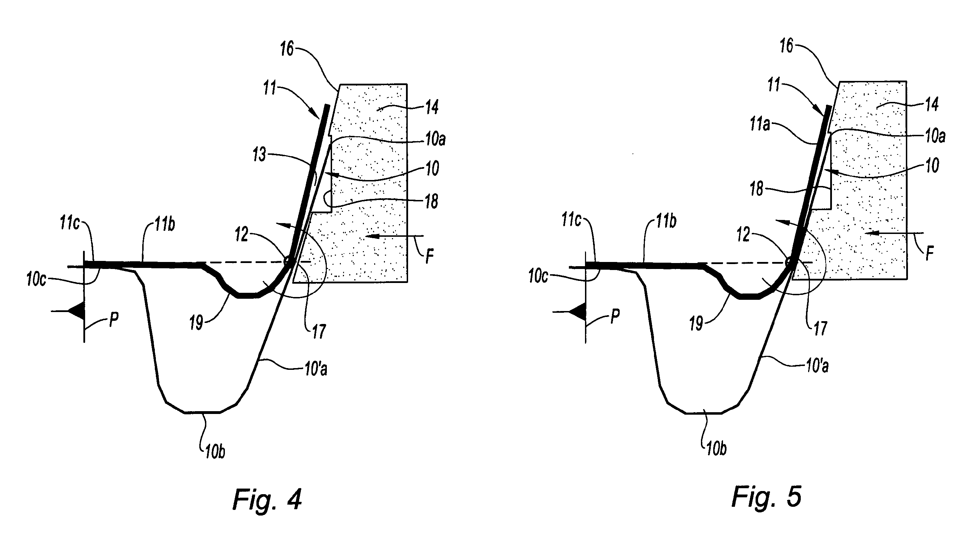

Selon le procédé, les deux tôles 10, 11 sont disposées en appui l'une contre l'autre suivant une ligne 12 pour former un dièdre dans la zone 13 (voir figure 4) destinée à être soudée par laser et on applique sur les deux tôles 10, 11 un moyen de serrage 14 pour plier l'une 10 des tôles vers l'autre tôle 11 autour de la ligne d'appui 12 pour réduire l'angle du dièdre formé par les deux tôles 10, 11 afin de former entre celles-ci un espacement prédéterminé, comme indiqué sur la figure 5.

Comme montré par la figure 3, le bord 10a de la première tôle 10 comporte une encoche 15 dont le fond est distant de la ligne d'appui 12 et le moyen de serrage 14 est un bloc rigide comportant deux surfaces d'appui espacées 16, 17.

L'une 16 de ces deux surfaces du bloc 14 est appliquée (voir figure 3) sur la seconde tôle 11 à travers l'encoche 15 de la première tôle 10 et l'autre 17 des surfaces d'appui est appliquée sur cette première tôle 10 dans la zone de la ligne d'appui 12, de façon à plier la première tôle 10 autour de la ligne d'appui 12.

Dans l'exemple illustré par les figures 3 à 5, la seconde tôle 11 qui est constituée par la tôle d'encadrement est plus épaisse que la première tôle 10, c'est-à-dire la doublure pour que cette seconde tôle 11 résiste à l'effort de serrage exercé dans le sens de la flèche F des figures 4 et 5 par le bloc rigide 14.

Les figures 4 et 5 montrent que la surface d'appui 16 du bloc rigide 14 qui est appliquée sur la seconde tôle 11 présente une inclinaison égale de celle de cette seconde tôle 11 et l'autre surface d'appui 17 qui est appliquée sur la première tôle 10 présente une inclinaison différente de celle de la première tôle 10 pour exercer sur celle-ci un effort de serrage qui plie la première tôle 10 autour de la ligne d'appui 12 jusqu'à ce que l'inclinaison de cette tôle 10 soit égale à celle de la surface d'appui 17.

Dans cette position, l'espacement prédéterminé entre les deux tôles 10, 11 est de l'ordre de 0,1 mm, ce qui est suffisant pour permettre aux gaz de s'échapper lors du soudage par laser effectué dans la zone 13.

Les figures 4 et 5 montrent par ailleurs que les deux surfaces d'appui 16, 17 du bloc rigide 14 sont séparées l'une de l'autre par un évidement 18.

Dans l'exemple illustré par les figures 3 à 5, la tôle 10 de la doublure présente une section transversale sensiblement en U.

L'une 10a des ailes de ce U est appliquée contre la tôle 11 de l'encadrement pour former avec celle-ci la ligne d'appui 12 définie plus haut.

Par ailleurs, la tôle 11 de l'encadrement présente une section transversale sensiblement en L.

La ligne d'appui 12 entre les deux tôles 10, 11 est située à la base de l'une 11 a des deux branches du L.

L'effort de serrage F du bloc de serrage 14 est exercé sensiblement dans la direction de l'autre branche 11 b du L formé par la tôle 11.

L'effort de serrage F exercé par le bloc de serrage 14 est encaissé principalement par la tôle 11 qui est la plus épaisse et donc ne plie pas.

Le plan P représenté sur les figures 4 et 5 est un plan de référence qui ne se déplace pas lors de l'effort exercé par le bloc de serrage 14.

La référence 19 est un pli réalisé sur la branche 11b de la tôle 11 dont la convexité est dirigée vers le fond 10b du U de la tôle 10 de la doublure.

Ce pli 19 augmente la résistance mécanique de la tôle 11.

Les bords 10c et 11 c des tôles 10, 11 situés à l'opposé de la ligne d'appui 12 pourraient bien entendu être soudés par laser en utilisant le procédé décrit plus haut.

Bien entendu, le bord 10a de la tôle 10 de la doublure qui est opposé à la base 10b du U pourrait présenter plusieurs encoches 15 réparties tout autour de l'encadrement de la porte.

Chacune de ces encoches 15 pourrait ainsi être adaptée pour le passage d'un bloc de serrage 14 afin de pouvoir mettre en oeuvre le procédé selon l'invention sur plusieurs zones réparties autour de l'encadrement.

Les principaux avantages du procédé d'assemblage selon l'invention sont les suivants.

Il permet d'éviter de créer sur l'une des tôles des empreintes ou autres formes.

Il permet ainsi de simplifier les outillages de ferrage et par conséquent de réduire les coûts.

Il permet d'améliorer la qualité de l'assemblage étant donné que l'accostage entre les deux tôles est tel qu'il ne risque pas d'affecter cette qualité.

## Revendications

1. Procédé d'assemblage de deux tôles (10, 11) par soudure laser, dans lequel les deux tôles (10, 11) sont disposées en appui l'une contre l'autre suivant une ligne (12) pour former un dièdre dans la zone (13) destinée à être soudée par laser, par application d'un moyen de serrage (14) pliant l'une (10) des tôles vers l'autre tôle (11) autour de la ligne d'appui (12), **caractérisé en ce que** ledit moyen de serrage est formé d'un bloc rigide comportant deux surfaces d'appui espacées (16, 17), l'une (17) des surfaces d'appui étant appliquée sur cette première tôle (10) dans la zone de ladite ligne d'appui (12), de façon à plier la première tôle (10) autour de ladite ligne d'appui (12) pour réduire l'angle du dièdre formé par les deux tôles (10, 11) dans ladite zone (13), l'autre (16) de ces deux surfaces du bloc (14) étant sur la seconde tôle (11) à travers une encoche (15) de la première tôle (10) dont le fond est distant de ladite ligne d'appui (12), afin de former entre les tôles (10, 11) un espacement prédéterminé.

2. Procédé d'assemblage selon la revendication 1, **caractérisé en ce que** ledit espacement prédéterminé entre les deux tôles (10, 11) est de l'ordre de 0,1 mm.

3. Procédé d'assemblage selon la revendication 1 ou 2, **caractérisé en ce que** la seconde tôle (11) est plus épaisse que la première tôle (10) pour que cette seconde tôle (11) résiste à l'effort de serrage (F) exercé par ledit bloc rigide (14).

4. Procédé d'assemblage selon l'une quelconque des revendications 1 à 3, **caractérisé en ce que** la seconde tôle (11) est l'encadrement d'une porte de véhicule automobile et la première tôle (10) est la doublure de celle-ci.

5. Procédé d'assemblage selon la revendication 4, **caractérisé en ce que** la tôle (10) de la doublure présente une section transversale sensiblement en U, l'une des ailes de ce U étant appliquée contre la tôle (11) de l'encadrement pour former avec celle-ci ladite ligne d'appui (12).

6. Procédé d'assemblage selon la revendication 5, **caractérisé en ce que** la tôle (11) de l'encadrement présente une section transversale sensiblement en L, ladite ligne d'appui (12) étant située à la base de l'une des deux branches (11 a, 11 b) du L, l'effort de serrage (F) du moyen de serrage (14) étant exercé sensiblement dans la direction de l'autre branche du L.

7. Procédé d'assemblage selon la revendication 6, **caractérisé en ce que** le bord de la tôle (10) de la doublure qui est opposé à la base du U présente plusieurs encoches (15) réparties tout autour de l'encadrement de la porte, chacune de ces encoches (15) étant adaptée pour le passage d'un moyen de serrage (14).

8. Procédé d'assemblage selon l'une quelconque des revendications précédentes, **caractérisé en ce que** la surface d'appui (16) dudit bloc rigide (14) destinée à être appliquée sur la seconde tôle (11) présente une inclinaison égale de celle de ladite seconde tôle (11) et l'autre surface d'appui (17) qui est destinée à être appliquée sur la première tôle (10) présente une inclinaison différente de celle de la première tôle (10) pour exercer sur celle-ci un effort de serrage qui plie la première tôle (10) autour de ladite ligne d'appui (12) jusqu'à ce que l'inclinaison de cette tôle (10) soit égale à celle de ladite autre surface d'appui (17) et que ledit espacement prédéterminé entre les deux tôles (10, 11) soit de l'ordre de 0,1 mm.

9. Procédé d'assemblage selon l'une quelconque des revendications précédentes, **caractérisé en ce que** les deux surfaces d'appui (16, 17) dudit bloc rigide (14) sont séparées l'une de l'autre par un évidement (18).

## Claims

1. Method of assembling two metal sheets (10, 11) by laser welding, in which the two metal sheets (10, 11) are placed in abutment one against the other along a line (12) in order to form a dihedron in the area (13) intended to be laser welded, by applying a clamping means (14) folding one (10) of the metal sheets towards the other metal sheet (11) around the abutment line (12), **characterised in that** said clamping means is formed by a rigid block comprising two abutment surfaces spaced apart (16, 17), one (17) of the abutment surfaces being applied to this first metal sheet (10) in the area of said abutment line (12), so as to fold the first metal sheet (10) around said abutment line (12) in order to reduce the angle of the dihedron formed by the two metal sheets (10, 11) in said area (13), the other one (16) of these two surfaces of the block (14) being applied to the second metal sheet (11) through a notch (15) in the first metal sheet (10) the bottom of which is distant from said abutment line (12), in order to form a predetermined spacing between the metal sheets (10, 11).

2. Assembly method according to claim 1, **characterised in that** said predetermined spacing between the two metal sheets (10, 11) is around 0.1 mm.

3. Assembly method according to claim 1 or 2, **characterised in that** the second metal sheet (11) is thicker than the first metal sheet (10) so that this second metal sheet (11) withstands the clamping force (F) exerted by said rigid block (14).

4. Assembly method according to any one of claims 1 to 3, **characterised in that** the second metal sheet (11) is the frame of a motor vehicle door and the first metal sheet (10) is the lining thereof.

5. Assembly method according to claim 4, **characterised in that** the metal sheet (10) of the lining has a substantially U-shaped transverse section, one of the arms of this U being applied against the metal sheet (11) of the frame in order to form therewith said abutment line (12).

6. Assembly method according to claim 5, **characterised in that** the metal sheet (11) of the frame has a substantially L-shaped transverse section, said abutment line (12) being situated at the base of the one of the two arms (11 a, 11 b) of the L, the clamping force (F) of the clamping means (14) being exerted substantially in the direction of the other arm of the L.

7. Assembly method according to claim 6, **characterised in that** the edge of the metal (10) of the lining that is opposite to the base of the U has several notches (15) distributed all around the frame of the door, each of these notches (15) being adapted for the passage of a clamping means (14).

8. Assembly method according to any one of the preceding claims, **characterised in that** the abutment surface (16) of said rigid block (14) intended to be applied to the second metal sheet (11) has an inclination equal to that of said second metal sheet (11) and the other abutment surface (17) that is intended to be applied to the first metal sheet (10) has an inclination different from that of the first metal sheet (10) in order to exert thereon a clamping force that folds the first metal sheet (10) around said abutment line (12) until the inclination of this metal sheet (10) is equal to that of said other abutment surface (17) and said predetermined space between the two metal sheets (10, 11) is around 0.1 mm.

9. Assembly method according to any one of the preceding claims, **characterised in that** the two abutment surfaces (16, 17) of said rigid block (14) are separated from each other by a recess (18).

## Patentansprüche

1. Verfahren zum Zusammenfügen von zwei Blechen (10, 11) durch Laserschweißen, bei dem die beiden Bleche (10, 11) entlang einer Linie (12) auf Anschlag gegeneinander angeordnet werden, um im Bereich (13), der zum Laserschweißen vorgesehen ist, durch das Anbringen einer Klemmvorrichtung (14) einen Dieder zu bilden, die eines (10) der Bleche um die Auflagelinie (12) zum anderen Blech (11) biegt, **dadurch gekennzeichnet, dass** die besagte Klemmvorrichtung durch einen steifen Block gebildet wird, der zwei Auflageflächen (16, 17) in einem Abstand umfasst, wobei eine (17) der Auflageflächen im Bereich der besagten Auflagelinie (12) auf diesem ersten Blech (10) aufliegt, sodass das erste Blech (10) um die besagte Anschlaglinie (12) gebogen wird, um den Winkel des Dieders zu verringern, der im besagten Bereich (13) von den beiden Blechen (10, 11) gebildet wird, und die andere (16) dieser beiden Flächen des Blocks (14) durch eine Auskerbung (15) im ersten Blech (10) auf dem zweiten Blech (11) aufliegt, deren Basis einen Abstand von der besagten Auflagelinie (12) aufweist, um zwischen den Blechen (10, 11) einen vorbestimmten Freiraum zu bilden.

2. Fügeverfahren nach Anspruch 1, **dadurch gekennzeichnet, dass** der besagte vorbestimmte Freiraum zwischen den beiden Blechen (10, 11) in der Größenordnung von 0,1 mm liegt.

3. Fügeverfahren nach Anspruch 1 oder 2, **dadurch gekennzeichnet, dass** das zweite Blech (11) stärker ist, als das erste Blech (10), damit dieses zweite Blech (11) der Klemmkraft (F) widersteht, die vom besagten steifen Block (14) ausgeübt wird.

4. Fügeverfahren nach irgendeinem der Ansprüche 1 bis 3, **dadurch gekennzeichnet, dass** das zweite Blech (11) die Umrahmung einer Kraftfahrzeugtüre ist, und das erste Blech (10) deren Innenblech ist.

5. Fügeverfahren nach Anspruch 4, **dadurch gekennzeichnet, dass** das Blech (10) des Innenblechs einen in etwa U-förmigen Querschnitt aufweist, bei dem einer der Flügel dieses U gegen das Blech (11) der Umrahmung gedrückt wird, um damit die besagte Auflagelinie (12) zu bilden.

6. Fügeverfahren nach Anspruch 5, **dadurch gekennzeichnet, dass** das Blech (11) der Umrahmung einen in etwa L-förmigen Querschnitt aufweist, wobei sich die besagte Auflagelinie (12) an der Basis eines der beiden Äste (11 a, 11 b) des L befindet, und die Klemmkraft (F) der Klemmvorrichtung (14) in etwa in Richtung des anderen Astes des L ausgeübt wird.

7. Fügeverfahren nach Anspruch 6, **dadurch gekennzeichnet, dass** der Rand des Bleches (10) des Innenblechs, der sich gegenüber der Basis des U befindet, mehrere Auskerbungen (15) aufweist, die rund um die Türumrahmung verteilt sind, wobei jede dieser Auskerbungen (15) für die Durchführung einer Klemmvorrichtung (14) geeignet ist.

8. Fügeverfahren nach irgendeinem der vorherigen Ansprüche, **dadurch gekennzeichnet, dass** die Auflagefläche (16) des besagten steifen Blocks (14), die dazu bestimmt ist, auf dem zweiten Blech (11) aufzuliegen, eine Neigung aufweist, die gleich jener des besagten zweiten Bleches (11) ist, und die andere Auflagefläche (17), die dazu bestimmt ist, auf dem ersten Blech (10) aufzuliegen, eine Neigung aufweist, die ungleich jener des besagten ersten Bleches (10) ist, um darauf eine Klemmkraft auszuüben, die das erste Blech (10) um die besagte Auflagelinie (12) biegt, bis die Neigung dieses Bleches (10) gleich jener der besagten anderen Auflagefläche (17) ist, und der besagte vorbestimmte Freiraum zwischen den beiden Blechen (10, 11) in der Größenordnung von 0,1 mm liegt.

9. Fügeverfahren nach irgendeinem der vorherigen Ansprüche, **dadurch gekennzeichnet, dass** die beiden Auflageflächen (16, 17) des besagten steifen Blocks (14) durch eine Aussparung (18) voneinander getrennt sind.
